# EUROPÄISCHE PATENTSCHRIFT

(11) **EP 1 375 053 B1**
(45) Veröffentlichungstag und Bekanntmachung des Hinweises auf die Patenterteilung: **07.01.2004**
(21) Anmeldenummer: 02023369.8
(22) Anmeldetag: 18.10.2002
(51) Int. Cl.: B23K 26/08, B21C 37/08, B23K 26/26

(54) **Stationäre Schweissvorrichtung und Verfahren zum Längsverschweissen von Profilen**
Stationary welding device and process to longitudinally weld profiles
Dispositif de soudage stationnaire et procédé de soudage longitudinal de profilés

(43) Veröffentlichungstag der Anmeldung: 02.01.2004
(73) Patentinhaber: Dreistern-Werk Maschinenbau GmbH & co. KG, 79650 Schopfheim (DE)
(72) Erfinder:
(74) Vertreter: Kaiser, Magnus, Dipl.-Phys.

(56) Entgegenhaltungen:
- GB-A- 741 302

## Beschreibung

Die Erfindung betrifft eine stationäre Schweißvorrichtung zum Längsverschweißen von Profilen mit den Merkmalen des Oberbegriffs des Patentanspruchs 1 sowie ein entsprechendes Verfahren mit den Merkmalen des Oberbegriffs des Patentanspruchs 9. Eine solche Vorrichtung und ein solches Verfahren sind aus GB-A-741 302 bekannt.

Es handelt sich hierbei also um eine stationäre Schweißvorrichtung mit Transportelementen zum Transport eines Profils durch die Schweißvorrichtung und mit mindestens einem Schweißkopf, der einen Schweißpunkt zur Herstellung einer Schweißnaht auf dem durch die Schweißvorrichtung laufenden Profil erzeugt. Die Profilbewegung wird in vorwählbaren Intervallen von einer im wesentlichen konstanten Produktionsgeschwindigkeit bis zum Stillstand des Profils abgebremst und anschließend wieder auf die Produktionsgeschwindigkeit beschleunigt, während die Beaufschlagung des Profils mit Schweißenergie unterhalb einer Transportschwellengeschwindigkeit des Profils abgeschaltet ist. Das Verfahren zum Längsverschweißen von Profilen, von dem die Erfindung außerdem ausgeht, entspricht in seinen Merkmalen der Funktion der beschriebenen Vorrichtung.

Zum Einsatz kommen solche Vorrichtungen und Verfahren üblicherweise im Rahmen von Profilieranlagen, in denen Metallbänder beim Durchlaufen einer Mehrzahl von Rollformwerkzeugen stufenweise zu Profilen oder Rohren umgeformt werden. Die üblicherweise in Linie nachfolgende Schweißstation ermöglicht dann beispielsweise, überlappende oder aneinanderstoßende Bereiche des Profils bzw. des Rohrs, oder auch zwei oder mehrere verschiedene Profile miteinander zu verschweißen.

Für ein fertiges oder weiterverarbeitungsfähiges Produkt müssen die Profile oder Rohre am Ende der Produktionslinie abgelängt werden. Hierbei kommen bei kontinuierlich arbeitenden Produktionslinien mitlaufende Trennmaschinen zum Einsatz, die zum Ablängen auf die Transportgeschwindigkeit des fertigen Profils beschleunigt werden müssen, worauf sie nach dem Schnitt naturgemäß abgebremst und wieder in ihre Ausgangsposition zurückgeführt werden müssen.

Für solche mitlaufenden Trennmaschinen ist ein hoher konstruktiver sowie wartungstechnischer Aufwand von Nöten, um die Trennschnitte in der erforderlichen Genauigkeit und Geschwindigkeit herstellen zu können. Daher sind Profilieranlagen mit Schweißvorrichtungen der eingangs genannten Art entwickelt worden, bei denen der Transport des geschweißten Profils in vorwählbaren Intervallen gestoppt wird, um anschließend wieder anzulaufen. Dies ermöglicht die Verwendung einer konventionellen, stationären Trenneinrichtung zum Ablängen der fertigen Profile; die Notwendigkeit einer aufwendigen mitlaufenden Trennmaschine entfällt damit.

Hierdurch ergeben sich allerdings Schwierigkeiten in der Schweißvorrichtung: Das Abbremsen von der Produktionsgeschwindigkeit bis zum Stillstand des Profils sowie das anschließende Beschleunigen des Profils auf Produktionsgeschwindigkeit benötigt jeweils eine gewisse Zeit und somit eine gewisse Transportstrecke. Die Schweißenergiemenge, die am Schwerpunkt in das Profilmaterial eingebracht wird, steigt bei konstant bleibender Schweißenergie und langsamer werdender Transportgeschwindigkeit naturgemäß an. Dies kann zwar meist durch Herunterregeln der Schweißenergie ausgeglichen werden, jedoch nur bis zu einer von der Schweißtechnik abhängigen Transportschwellengeschwindigkeit, unterhalb der die Schweißenergie vollständig ausgeschaltet werden muss, um das Material nicht lokal zu zerstören.

Im Ergebnis führt dies dazu, dass bei einer stationären Schweißvorrichtung der eingangs genannten Art ein Bereich an der Stelle, die während des Stillstands des Profils am Ort des Schweißpunkts zu liegen kommt, eine Lücke in der Schweißnaht bleibt. Diese Lücke wird umso größer, je höher die Produktionsgeschwindigkeit gewählt wird und sie hängt auch davon ab, wie weit die Schweißenergie heruntergeregelt werden kann. Soweit eine solche Lücke in der Schweißnaht beim fertigen Produkt stört, muss diese nachträglich beseitigt werden; ein Herausschneiden der entsprechenden Stelle durch die in der Anlage vorhandene stationäre Trennmaschine scheidet aus, da dann je Stop der Produktion zwei Schnitte erforderlich sind, die ihrerseits jedoch zwei Stops der Produktion erfordern. Es blieb also bislang nichts weiter übrig, als entweder doch wieder eine mitlaufende Trennmaschine einzusetzen, oder aber den Ausschuss separat abzuschneiden.

Ausgehend von diesem Stand der Technik liegt der Erfindung die Aufgabe zugrunde, eine Schweißvorrichtung und ein Verfahren der eingangs genannten Art so zu verbessern, dass trotz des intermittierenden Stillstands des zu verschweißenden Profils eine ununterbrochene Schweißnaht hergestellt werden kann.

Gelöst ist diese Aufgabe durch eine Schweißvorrichtung mit den Merkmalen des Patentanspruchs 1 sowie durch ein Verfahren mit den Merkmalen des Patentanspruchs 9.

Die erfindungsgemäß ausgebildete Schweißvorrichtung mit Transportelementen zum Transport eines Profils durch die Schweißvorrichtung und einem Schweißkopf, der einen Schweißpunkt zur Herstellung einer Schweißnaht auf dem Profil erzeugt, ist wie eingangs ausgeführt zum intermittierenden Abstoppen der Profilbewegung nebst einem entsprechenden Abschalten der Schweißenergie unterhalb einer Transportschwellengeschwindigkeit vorgesehen. Sie ist nach der Erfindung solcherart weiterentwickelt und insbesondere mit einem entsprechend ausgestalteten Schweißkopf versehen, dass der Ort des Schweißpunkts bei jedem Stillstand des Profils von einem Ausgangspunkt aus in Transportrichtung des Profils bewegt wird, wobei der Schweißpunkt nach dem Wiederanlaufen der Transportbewegung und dem Überschreiten der Transportschwellengeschwindigkeit entgegen der Transportrichtung an die Ausgangsposition zurückbewegt wird. Die Rückbewegung des Schnittpunktes muss dabei durchaus nicht unmittelbar nach dem Überschreiten der Transportschwellengeschwindigkeit und dem Wiedereinschalten der Schweißenergie erfolgen; vielmehr kann der Schweißpunkt wahlweise auch erst kurz vor oder gar während des erneuten Abbremsens der Profilbewegung an seinen Ausgangspunkt zurückbewegt werden.

Die erfindungsgemäßen Verbesserungen einer bekannten Schweißvorrichtung bzw. eines bekannten Schweißverfahrens führen dazu, dass trotz des intermittierenden Abstoppens der Transportbewegung des Profils eine ununterbrochene Schweißnaht oder zumindest eine deutliche Verkürzung der Unterbrechungsstrecke erzielt werden kann. Denn wenn die Schweißenergie beim Beschleunigen des Profils wieder eingeschaltet wird, ist der Schweißpunkt erfindungsgemäß in Transportrichtung, also zur unterbrochenen Schweißnaht hin verschoben, so dass die im Endeffekt verbleibende schweißnahtfreie Strecke verkleinert ist.

Vorzugsweise wird der Ort des Schweißpunkts so weit in Transportrichtung bewegt, dass der Schweißpunkt beim Überschreiten der Transportschwellengeschwindigkeit beim Wiederanlaufen der Transportbewegung die durch das Abschalten der Schweißenergiebeaufschlagung unterbrochene Schweißnaht fortsetzt. Hierbei kann auch vorgesehen sein, dass eine kurze Strecke der Schweißnaht überlappend, also doppelt geschweißt wird.

Die Rückwärtsbewegung des Schweißpunkts während des Transport des Profils hat bei geeignet gewählten Parametern keinen negativen Einfluss auf die Herstellung der Schweißnaht, so dass mit der Erfindung im Ergebnis eine gleichmäßig durchgehende Schweißnaht auch dann hergestellt werden kann, wenn das Profil intermittierend abgestoppt wird, um es mit einer stationären Trennmaschine ablängen zu können.

Um die Bewegung des Schweißpunkts bzw. des Ortes des Schweißpunkts entlang der Transportrichtung zu ermöglichen, kann der Schweißkopf entlang der Transportrichtung verschoben werden. Besonders einfach ist es jedoch, wenn der Schweißkopf so ausgebildet ist, dass er zur Bewegung des Schweißpunktes entlang der Transportrichtung des Profils lediglich verschwenkt werden muss. Selbstverständlich ist auch eine Kombination der beiden Alternativen möglich.

Besonders vorteilhaft kann die Erfindung mit einer Laser-Schweißvorrichtung realisiert werden. Denn dann kann der Schweißpunkt durch einfaches Verschwenken des Laserstrahls entlang der Transportrichtung bewegt werden, ohne irgendeine translatorische Bewegung des Schweißkopfs vorsehen zu müssen. Bei einer Laser-Schweißvorrichtung kann das Verschwenken des Laserstrahls darüber hinaus besonders einfach dadurch bewirkt werden, dass der Schweißkopf mit einem schwenkbaren Spiegel versehen wird. Daneben ist selbstverständlich auch ein Verschwenken des gesamten Schweißkopfs möglich.

Bevorzugterweise wird die erfindungsgemäße Schweißvorrichtung so konzipiert, dass die in das Profil eingebrachte momentane Schweißenergiemenge abhängig von der momentanen Transportgeschwindigkeit des Profils regelbar ist. Beim Abbremsen des Profils kann dann die Schweißenergiemenge also bis zur Transportschwellengeschwindigkeit heruntergeregelt und beim Beschleunigen der Transportbewegung entsprechend wieder hochgeregelt werden, um insgesamt eine gleichmäßige Schweißnaht erzielen zu können. Zusätzlich kann die Schweißenergiemenge leicht erhöht werden, während der Schweißpunkt entgegen der Transportrichtung an seine Ausgangsposition zurückbewegt wird. Zweckmäßigerweise wird dies gleich beim Hochregeln der Schweißenergiemenge während des Beschleunigens der Transportbewegung berücksichtigt.

Mit der erfindungsgemäßen Bewegung des Ortes des Schweißpunktes kann jedoch sogar auf eine Regelung der Schweißenergiemenge verzichtet werden, und zwar dann, wenn die Schweißkopfsteuerung die Rückbewegung des Schweißpunktes während des Wiederanlaufens der Transportbewegung veranlasst und derart an die Beschleunigung des Profils anpasst, dass die Relativgeschwindigkeit von Schweißpunkt und Profil fortlaufend nahezu der Produktionsgeschwindigkeit entspricht. Um hier auch beim Abbremsvorgang des Profils auf eine Regelung der Schweißenergiemenge verzichten zu können, kann beispielsweise die Schweißenergie bereits beim Beginn der Verzögerung abgeschaltet werden und der Ort des Schweißpunktes während des Stillstands des Profils bis zur Unterbrechung der Schweißnaht bewegt werden, so dass im Ergebnis völlig ohne Herunterregeln der Schweißenergiemenge dennoch eine ununterbrochene, gleichmäßige Schweißnaht entsteht.

Ein Ausführungsbeispiel der Erfindung wird im folgenden anhand der Zeichnungen näher beschrieben und erläutert. Es zeigen:
- Figur 1: eine schematische Draufsicht auf eine erfindungsgemäße Schweißvorrichtung;
- Figur 2: den Querschnitt eines Profils beim Verschweißen;
- Figur 3: eine Draufsicht auf ein fertig verschweißtes Profil;
- Figur 4: eine schematische Seitenansicht einer Profilieranlage mit integrierter Schweißvorrichtung.

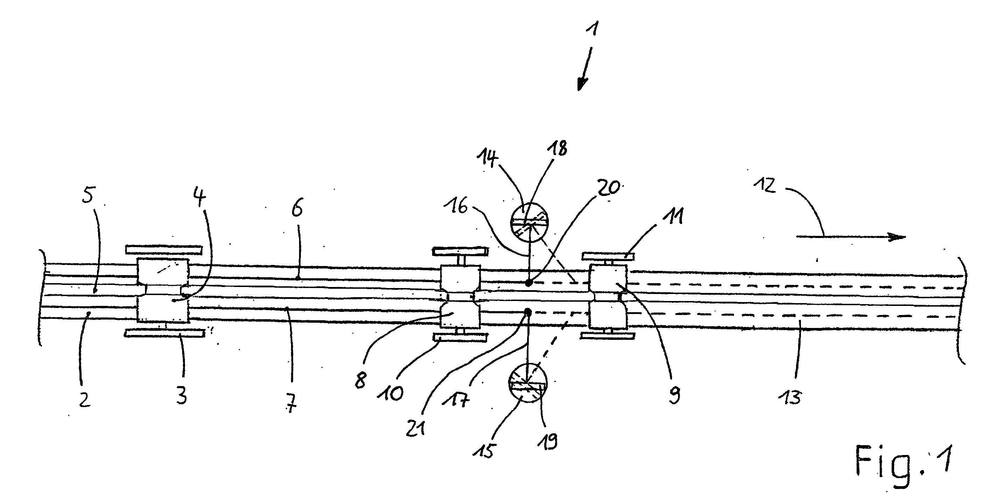

Figur 1 zeigt in schematischer Draufsicht eine erfindungsgemäß ausgestaltete Schweißvorrichtung 1: Ein erstes Profil 2, von dem man nur die obere Wandung sieht, wird mittels eines angetriebenen, in einem Gestell 3 gelagerten Führungsrollenpaares 4 (von dem man nur die obere Führungsrolle sieht) mit einem zweiten Profil 5 zusammengeführt, und zwar derart, dass dieses auf der oberen Wandung des ersten Profils 2 aufliegt. An den äußeren Kanten des zweiten Profils 5, die hier mit den Bezugszeichen 6 und 7 bezeichnet sind, soll das zweite Profil 5 auf das erste Profil 2 aufgeschweißt werden. Dies geschieht zwischen einem ersten Rollenpaar 8 und einem zweiten Rollenpaar 9, die beide wiederum in Gestellen 10 und 11 gelagert sind und die beiden Profile 2 und 5 aufeinanderpressen. Bezüglich der Transportrichtung 12 des fertigen Profils 13 sind horizontal rechts und links der Profile 2, 5 ein linker Laserschweißkopf 14 und ein rechter Laserschweißkopf 15 angeordnet, die beide jeweils einen Laserstrahl 16, 17, der von oben aus einer senkrecht zur Bildebene liegenden Richtung kommt, mittels je eines Spiegels 18, 19 auf je einen Schweißpunkt 20, 21 an den Kanten 6 und 7 des zweiten Profils 5 richten. Mit durchbrochenen Kantenlinien 6, 7 ist angedeutet, dass aus dem ersten Profil 2 und dem zweiten Profil 5 nach Verlassen der Schweißvorrichtung 1 ein fertiges Profil 13 entstanden ist.

Um das erfinderische Prinzip umzusetzen, sind vorliegend die Spiegel 18, 19 der Schweißköpfe 14, 15 oder die Schweißköpfe 14, 15 selbst derart drehbar ausgebildet, dass die Laserstrahlen 16, 17 entlang der Transportrichtung 12 schwenkbar sind und somit die Schweißpunkte 20, 21 entlang der jeweiligen Kanten 6, 7 in und gegen die Transportrichtung 12 bewegt werden können.

Wird nun die Transportbewegung des Profils 13 durch die Schweißvorrichtung 1 bis zum Stillstand abgebremst, wird zunächst die Energie der Laserstrahlen 16, 17 heruntergeregelt, bis die Laserstrahlen 16, 17 unterhalb einer Transportschwellengeschwindigkeit abgeschaltet werden, um eine Beschädigung des Profilmaterials durch zu hohen Energieeintrag zu vermeiden. Das Schweißnahtende bewegt sich somit bis zum vollständigen Stillstand des Profils 13 ein Stück weit in Transportrichtung 12 von den Schweißpunkten 20, 21 weg. Beim Wiederanlaufen des Profils 13 werden beim Erreichen der Transportschwellengeschwindigkeit die Laserstrahlen 16, 17 wieder eingeschaltet und in ihrer Energie sukzessive hochgeregelt, bis die Produktionsgeschwindigkeit des Profils 13 erreicht ist. Um nun zu vermeiden, dass zwischen dem Ende der Schweißnaht und dem Wiederbeginn der neuen Schweißnaht eine ungeschweißte Lücke zwischen den Profilen 2 und 5 entsteht, werden die Spiegel 18, 19 der Schweißköpfe 14, 15 während des Stillstands des Profils 13 bei ausgeschalteten Laserstrahlen 16, 17 so verschwenkt, bis der Ort der Schweißpunkte 20, 21 in Transportrichtung 12 gesehen deutlich vor dem Ende der bis jetzt hergestellten Schweißnähte liegt, um beim Wiederanlaufen der Transportbewegung und Erreichen der Transportschwellengeschwindigkeit die Schweißnaht ununterbrochen fortsetzen zu können. Diese Situation ist in der Zeichnung mit durchbrochenen Linien für die Laserstrahlen 16, 17 angedeutet. Während des Hochbeschleunigens des Profils 13 und gegebenenfalls auch noch nach Erreichen der Produktionsgeschwindigkeit werden die Spiegel 18, 19 der Schweißköpfe 14, 15 wieder zurückgeschwenkt, bis die mit durchgezogenen Linien dargestellte Ausgangsposition der Laserstrahlen 16, 17 bzw. der Schweißpunkte 20, 21 wieder erreicht ist. Danach kann dann das nächste Abstoppen der Transportbewegung erfolgen.

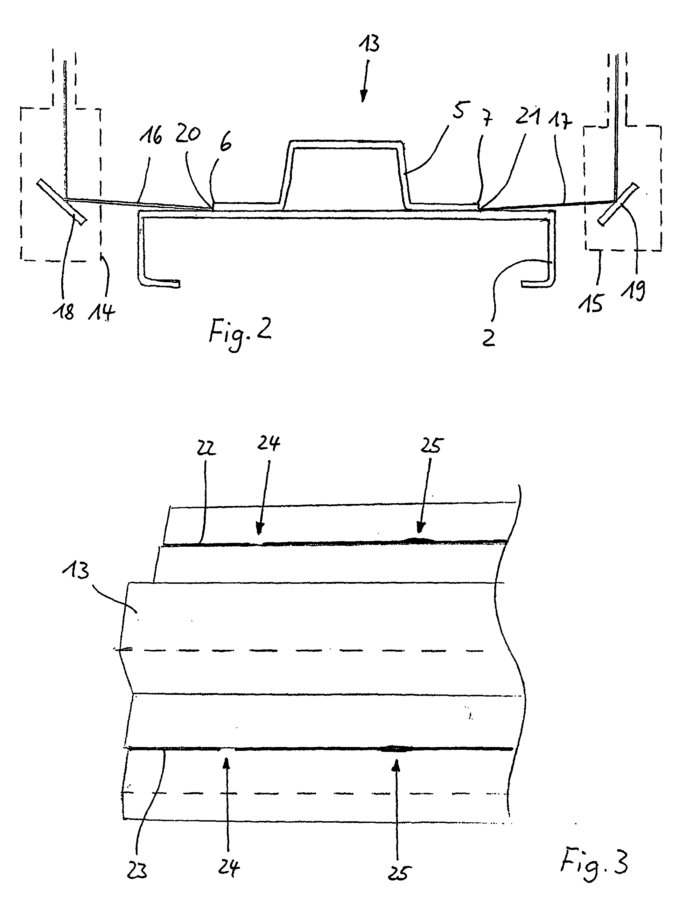

Figur 2 zeigt im Querschnitt das in Figur 1 hergestellte Profil 13 während des Schweißvorgangs. Das zweite Profil 5 ist auf das erste Profil 2 aufgelegt und wird an seinen Kanten 6, 7 mit dem ersten Profil 2 verschweißt. Nur schematisch dargestellt sind der linke und rechte Laserschweißkopf 14, 15 mit den darin angeordneten schwenkbaren Spiegeln 18, 19, die die Laserstrahlen 16, 17 auf die an den Kanten 6, 7 befindlichen Schweißpunkte 20, 21 umlenken, an denen dann während der Längsbewegung des Profils 13 jeweils eine Schweißnaht entsteht. Durch die Verwendung von Laserstrahlen 16, 17 ist es problemlos möglich, durch einfache Schwenkbewegungen der Spiegel 18, 19 die Schweißpunkte 20, 21 entlang der Kanten 6, 7 in und gegen die Transportrichtung 12 zu bewegen, ohne den Eintrag von Schweißenergie in das Profilmaterial nennenswert zu verändern.

Figur 3 zeigt das in Figur 2 bereits dargestellte Profil 13 in Draufsicht. Hierbei sind zwei verschiedene erfindungsgemäße Steuerungsarten zur Herstellung einer linken Schweißnaht 22 und einer rechten Schweißnaht 23 symbolisiert. An den mit Pfeilen 24 markierten Stellen ist eine Schweißnahtunterbrechung zu erkennen, die davon herrührt, dass eine Überlappung der Schweißnähte vermieden werden sollte und die Bewegung der Schweißpunkte 20, 21 in Transportrichtung 12 während des Stillstands des Profils 13 etwas kürzer als für eine ununterbrochene Schweißnaht 22, 23 erforderlich gewählt wurde.

An der in Figur 3 mit Pfeilen 25 markierten Stelle der Schweißnähte 22, 23 ist hingegen eine solche Überlappung erkennbar. Um einerseits jegliche Unterbrechung der Schweißnähte 22, 23 sicher vermeiden zu können und andererseits die möglicherweise am untersten Regelbereich der Laserleistung instabil werdende Schweißenergiemenge zu kompensieren, wurde der Ort der Schweißpunkte 20, 21 während des Stillstandes des Profils 13 so weit in Transportrichtung 12 vorverlegt, dass bei Wiedereinschalten der Laserstrahlen 16, 17 eine Überlappung der Schweißnähte 22, 23 entstanden ist.

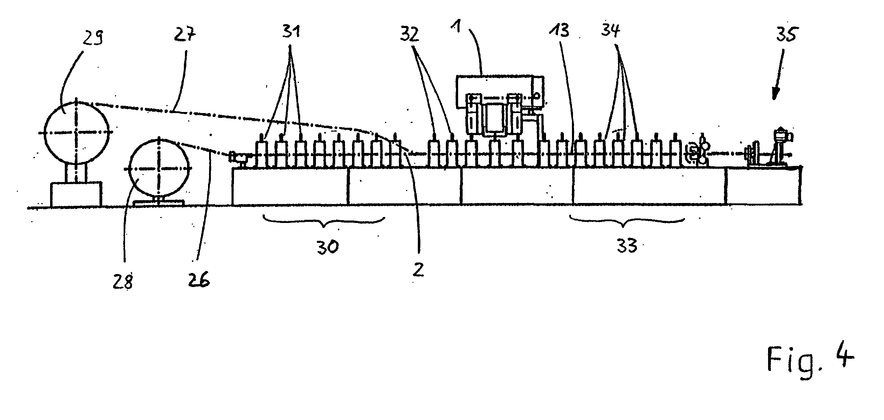

Figur 4 zeigt schließlich schematisch eine Profilieranlage zum intermittierend abgestoppten Betrieb, in die die erfindungsgemäße Schweißvorrichtung 1 integriert ist. Ein erstes Blechband 26 und ein zweites Blechband 27 werden von einer ersten Abwickelhaspel 28 und einer zweiten Abwickelhaspel 29 abgewickelt. Das erste Blechband 26 wird zum Einformen eines Trägerprofils durch eine Umformanlage 30 mit einer Mehrzahl von Rollformwerkzeugen 31 geleitet. Nach der Umformanlage 30 wird das eingeformte erste Profil 2 mit dem zweiten Blechband 27 zusammengeführt und in weiteren Rollformwerkzeugen 22 weiter umgeformt, wobei das zweite Blechband 27 zu einem zweiten Profil 5 umgeformt wird. Danach werden die Profile 2, 5 der erfindungsgemäßen Schweißvorrichtung 1 zugeführt und, wie in Figur 1 gezeigt, miteinander zu einem Profil 13 verschweißt. Dieses Profil 13 wird in einer weiteren Umformanlage 33 mit wiederum einer Mehrzahl von Rollformwerkzeugen 34 weiter umgeformt und am Ende in einer stationären Trennmaschine 35 auf die gewünschte Länge abgelängt.

Die Erfindung ermöglicht also eine qualitativ hochwertige Massenproduktion von teils kompliziert geformten Profilen auf Profilieranlagen auch mit stationären Trennmaschinen.

### Bezugszeichenliste

- 1: Schweißvorrichtung
- 2: Profil (erstes)
- 3: Gestell
- 4: Führungsrollenpaar
- 5: Profil (zweites)
- 6: Kante (linke)
- 7: Kante (rechte)
- 8: Rollenpaar (erstes)
- 9: Rollenpaar (zweites)
- 10: Gestell (erstes)
- 11: Gestell (zweites)
- 12: Transportrichtung
- 13: Profil
- 14: Schweißkopf (linker)
- 15: Schweißkopf (rechter)
- 16: Laserstrahl (linker)
- 17: Laserstrahl (rechter)
- 18: Spiegel (linker)
- 19: Spiegel (rechter)
- 20: Schweißpunkt (linker)
- 21: Schweißpunkt (rechter)
- 22: Schweißnaht (linke)
- 23: Schweißnaht (rechte)
- 24: Schweißnahtunterbrechung
- 25: Schweißnahtüberlappung
- 26: Blechband (erstes)
- 27: Blechband (zweites)
- 28: Abwickelhaspel (erste)
- 29: Abwickelhaspel (zweite)
- 30: Umformanlage
- 31: Rollformwerkzeuge
- 32: Rollformwerkzeuge
- 33: Umformanlage
- 34: Rollformwerkzeuge
- 35: Trennmaschine

## Patentansprüche

1. Stationäre Schweißvorrichtung zum Längsverschweißen von Profilen,
mit Transportelementen (31, 32, 34, 4, 8, 9) zum Transport eines Profils (2, 5, 13) durch die Schweißvorrichtung (1), wobei die Transportelemente (31, 32, 34, 4, 8, 9) so ausgebildet sind, dass die Profilbewegung in vorwählbaren Intervallen von einer konstanten Produktionsgeschwindigkeit bis zum Stillstand des Profils (13) abgebremst und anschließend wieder auf die Produktionsgeschwindigkeit beschleunigt wird,
und mit mindestens einem Schweißkopf (14, 15), der einen Schweißpunkt (20, 21) zur Herstellung einer Schweißnaht (22, 23) auf dem durch die Schweißvorrichtung (1) laufenden Profil (13) erzeugt, wobei die Beaufschlagung des Profils (13) mit Schweißenergie unterhalb einer Transportschwellengeschwindigkeit des Profils (13) abgeschaltet ist und wobei
der Schweißkopf (14, 15) so ausgebildet ist, dass der Ort des Schweißpunkts (20, 21) entlang der Transportrichtung (12) des Profils (13) bewegbar ist,
**dadurch gekennzeichnet,**
**dass** eine Steuerung für den Schweißkopf (14, 15) vorhanden ist, die so ausgebildet ist, dass der Ort des Schweißpunkts (20, 21) bei jedem Stillstand des Profils (13) von einem Ausgangspunkt aus in Transportrichtung (12) bewegt wird, wobei der Schweißpunkt (20, 21) nach dem Wiederanlaufen der Transportbewegung und dem Überschreiten der Transportschwellengeschwindigkeit entgegen der Transportrichtung (12) an die Ausgangsposition zurückbewegt wird.

2. Stationäre Schweißvorrichtung nach Anspruch 1,
**dadurch gekennzeichnet,**
**dass** der Schweißkopf (14, 15) zur Bewegung des Schweißpunktes (20, 21) schwenkbar ausgebildet ist.

3. Stationäre Schweißvorrichtung nach einem der Ansprüche 1 oder 2,
**dadurch gekennzeichnet,**
**dass** der Schweißkopf (14, 15) zur Bewegung des Schweißpunktes (20, 21) entlang der Transportrichtung (12) des Profils (13) verschiebbar ausgebildet ist.

4. Stationäre Schweißvorrichtung nach einem der Ansprüche 1 bis 3,
**dadurch gekennzeichnet,**
**dass** die Steuerung für den Schweißkopf (14, 15) so ausgebildet ist, dass der Ort des Schweißpunkts (20, 21) bei jedem Stillstand des Profils (13) so weit in Transportrichtung (12) bewegt wird, dass der Schweißpunkt (20, 21) nach dem Wiederanlaufen der Transportbewegung beim Überschreiten der Transportschwellengeschwindigkeit die durch das Abschalten der Schweißenergiebeaufschlagung unterbrochene Schweißnaht (22, 23) fortsetzt.

5. Stationäre Schweißvorrichtung nach Anspruch 4,
**dadurch gekennzeichnet,**
**dass** die Steuerung für den Schweißkopf (14, 15) so ausgebildet ist, dass die Rückbewegung des Schweißpunktes (20, 21) während des Wiederanlaufens der Transportbewegung erfolgt und derart an die Beschleunigung des Profils (13) angepasst ist, dass die Relativgeschwindigkeit von Schweißpunkt (20, 21) und Profil (13) in etwa der Produktionsgeschwindigkeit entspricht.

6. Stationäre Schweißvorrichtung nach einem der Ansprüche 1 bis 5,
**dadurch gekennzeichnet,**
**dass** der Schweißkopf (14, 15) ein Laser-Schweißkopf ist.

7. Stationäre Schweißvorrichtung nach Anspruch 6,
**dadurch gekennzeichnet,**
**dass** der Laser-Schweißkopf mit einem schwenkbaren Spiegel (18, 19) versehen ist.

8. Stationäre Schweißvorrichtung nach einem der Ansprüche 1 bis 7,
**dadurch gekennzeichnet,**
**dass** die in das Profil (13) eingebrachte momentane Schweißenergiemenge abhängig von der momentanen Transportgeschwindigkeit des Profils (13) regelbar ist.

9. Verfahren zum Längsverschweißen von Profilen,
wobei ein mit einer Schweißnaht zu versehendes Profil durch eine Schweißvorrichtung geführt wird,
wobei in der Schweißvorrichtung ein Schweißpunkt auf dem Profil erzeugt wird, um eine Schweißnaht herzustellen,
wobei die Profilbewegung in vorwählbaren Intervallen von einer Produktionsgeschwindigkeit bis zum Stillstand des Profils abgebremst und anschließend wieder auf die Produktionsgeschwindigkeit beschleunigt wird,
und wobei die Beaufschlagung des Profils mit Schweißenergie unterhalb der Transportschwellengeschwindigkeit abgeschaltet wird,
**dadurch gekennzeichnet,**
**dass** der Ort des Schweißpunktes bei jedem Stillstand des Profils von einem Ausgangspunkt aus in Transportrichtung des Profils bewegt wird, wobei der Schweißpunkt nach dem Wiederanlaufen der Transportbewegung und dem Überschreiten der Transportschwellengeschwindigkeit entgegen der Transportrichtung an die Ausgangsposition zurückbewegt wird.

10. Verfahren nach Anspruch 9,
**dadurch gekennzeichnet,**
**dass** der Ort des Schweißpunkts bei jedem Stillstand des Profils so weit in Transportrichtung bewegt wird, dass der Schweißpunkt nach dem Wiederanlaufen der Transportbewegung beim Überschreiten der Transportschwellengeschwindigkeit die durch das Abschalten der Schweißenergiebeaufschlagung unterbrochene Schweißnaht fortsetzt.

11. Verfahren nach einem der Ansprüche 9 oder 10,
**dadurch gekennzeichnet,**
**dass** die Rückbewegung des Schweißpunktes während des Wiederanlaufens der Transportbewegung erfolgt und derart an die Beschleunigung des Profils angepasst wird, dass die Relativgeschwindigkeit von Schweißpunkt und Profil in etwa der Produktionsgeschwindigkeit entspricht.

12. Verfahren nach einem der Ansprüche 9 bis 11,
**dadurch gekennzeichnet,**
**dass** zum Schweißen ein Laserstrahl verwendet wird.

## Claims

1. A stationary welding apparatus for longitudinally welding profiles including transport elements (31, 32, 34, 4, 8, 9) for transporting a profile (2, 5, 13) through the welding apparatus (1), the transport elements (31, 32, 34, 4, 8, 9) being so constructed that the movement of the profiles is braked in preselectable intervals from a constant production speed to standstill of the profiles (13) and is subsequently accelerated again to the production speed, and including at least one welding head (14, 15), which creates a welding point (20, 21) to produce a weld seam on the profile (13) moving through the welding apparatus (1), whereby the application to the profile (13) of welding energy is switched off below a threshold transport speed of the profile (13) and wherein the welding head (14, 15) is so constructed that the location of the welding point (20, 21) is movable along the transport direction (12) of the profile (13), **characterised in that** a controller for the welding head (14, 15) is present, which is so constructed that the location of the welding point (20, 21) is moved, each time the profile (13) stops, from a starting point in the transport direction (12), whereby, after restarting the transport movement and exceeding the threshold transport speed, the welding point (20, 21) is moved back opposite to the transport direction (12) to the starting position.

2. A stationary welding apparatus as claimed in Claim 1, **characterised in that** the welding head (14, 15) is of swivelling construction in order to move the welding point (20, 21).

3. A stationary welding apparatus as claimed in one of Claims 1 or 2,
**characterised in that** the welding head (14, 15) is of slidable construction in order to move the welding point (20, 21) along the transport direction of the profile (13).

4. A stationary welding apparatus as claimed in one of Claims 1 to 3, **characterised in that** the controller for the welding head (14, 15) is so constructed that the location of the welding point (20, 21) is moved so far in the transport direction (12), on each occasion the profile (13) stops, that, after restarting the transport movement, the welding point (20, 21) continues the welding seam (20, 23), which was interrupted by the switching off of the application of welding energy, when the threshold transport speed is exceeded.

5. A stationary welding apparatus as claimed in Claim 4, **characterised in that** the controller for the welding head (14, 15) is so constructed that the return movement of the welding point (20, 21) occurs during the restarting of the transport movement and is so matched to the acceleration of the profile (13) that the relative speed of the welding point (20, 21) and the profile (13) approximately corresponds to the production speed.

6. A stationary welding apparatus as claimed in one of Claims 1 to 5, **characterised in that** the welding head (14, 15) is a laser welding head.

7. A stationary welding apparatus as claimed in Claim 6, **characterised in that** the laser welding head is provided with a swivellable mirror (18, 19).

8. A stationary welding apparatus as claimed in one of Claims 1 to 7, **characterised in that** the instantaneous amount of welding energy introduced into the profile (13) is controllable in dependence on the instantaneous transport speed of the profile (13).

9. A method of longitudinally welding profiles, in which a profile to be provided with a welding seam is conveyed through a welding apparatus, a welding point being created in the welding apparatus on the profile in order to produce a welding seam, whereby the movement of the profile is braked in preselectable intervals from a production speed to standstill of the profile and is subsequently accelerated again to the production speed and whereby the application to the profile of welding energy is switched off below the threshold transport speed, **characterised in that** the location of the welding point is moved, each time the profile stops, from a starting point in the transport direction of the profile, whereby the welding point is moved back opposite to the transport direction to the starting position after the restart of the transport movement and after the threshold transport speed is exceeded.

10. A method as claimed in Claim 9, **characterised in that** the location of the welding point is moved, each time the profile stops, so far in the transport direction that, after restarting the transport movement, the welding point continues the welding seam interrupted by the switching off of the application of the welding energy when the threshold transport speed is exceeded.

11. A method as claimed in one of Claims 9 or 10, **characterised in that** the return movement of the welding point occurs during the restarting of the transport movement and is so matched to the acceleration of the profile that the relative speed of the welding point and profile approximately corresponds to the production speed.

12. A method as claimed in one of Claims 9 to 11, **characterised in that** a laser beam is used for the welding.

## Revendications

1. Dispositif de soudage stationnaire pour le soudage longitudinal de profilés,
avec des éléments de transport (31, 32, 34, 4, 8, 9) pour le transport d'un profilé (2, 5, 13) à travers le dispositif de soudage (1), les éléments de transport (31, 32, 34, 4, 8, 9) étant conçus de telle sorte que, à des intervalles pouvant être présélectionnés, le mouvement du profilé est freiné depuis une vitesse de production constante jusqu'à l'immobilisation du profilé (13), puis est à nouveau accéléré à la vitesse de production,
et avec au moins une tête de soudage (14, 15) qui produit un point de soudage (20, 21) pour la réalisation d'un cordon de soudure (22, 23) sur le profilé (13) passant à travers le dispositif de soudage (1), l'alimentation du profilé (13) en énergie de soudage étant désactivée en dessous d'un seuil de vitesse de transport du profilé (13), et la tête de soudage (14, 15) étant conçue de telle sorte que l'emplacement du point de soudage (20, 21) peut être déplacé le long de la direction de transport (12) du profilé (13),
**caractérisé en ce qu'**une commande est présente pour la tête de soudage (14, 15), qui est conçue de telle sorte que l'emplacement du point de soudage (20, 21) est, à chaque immobilisation du profilé (13), déplacé à partir d'un point initial dans la direction de transport (12), le point de soudage (20, 21) étant, à la suite de la reprise du mouvement de transport et du dépassement du seuil de vitesse de transport, ramené à la position initiale à l'encontre de la direction de transport (12).

2. Dispositif de soudage stationnaire selon la revendication 1, **caractérisé en ce que** la tête de soudage (14, 15) est conçue pivotante pour le déplacement du point de soudage (20, 21).

3. Dispositif de soudage stationnaire selon la revendication 1 ou 2, **caractérisé en ce que** la tête de soudage (14, 15) est conçue coulissante le long de la direction de transport (12) du profilé (13) pour le déplacement du point de soudage (20, 21).

4. Dispositif de soudage stationnaire selon l'une des revendications 1 à 3, **caractérisé en ce que** la commande pour la tête de soudage (14, 15) est conçue de telle sorte que l'emplacement du point de soudage (20, 21) est, à chaque immobilisation du profilé (13), suffisamment déplacé dans 1a direction de transport (12) pour que le point de soudage (20, 21), à la suite de la reprise du mouvement de transport, lors du dépassement du seuil de vitesse de transport, continue le cordon de soudure (22, 23) interrompu par la désactivation de l'alimentation en énergie de soudage.

5. Dispositif de soudage stationnaire selon la revendication 4, **caractérisé en ce que** la commande pour la tête de soudage (14, 15) est conçue de telle sorte que le mouvement de retour du point de soudage (20, 21) s'effectue pendant la reprise du mouvement de transport et est adapté à l'accélération du profilé (13) de telle sorte que la vitesse relative du point de soudage (20, 21) et du profilé (13) correspond approximativement à la vitesse de production.

6. Dispositif de soudage stationnaire selon l'une des revendications 1 à 5, **caractérisé en ce que** la tête de soudage (14, 15) est une tête de soudage au laser.

7. Dispositif de soudage stationnaire selon la revendication 6, **caractérisé en ce que** la tête de soudage au laser est pourvue d'un réflecteur pivotant (18, 19).

8. Dispositif de soudage stationnaire selon l'une des revendications 1 à 7, **caractérisé en ce que** la quantité d'énergie de soudage momentanément introduite dans le profilé (13) peut être régulée en fonction de la vitesse momentanée de transport du profilé (13).

9. Procédé de soudage longitudinal de profilés,
un profilé à munir d'un cordon de soudure étant dirigé à travers un dispositif de soudage, un point de soudage étant produit dans le dispositif de soudage sur le profilé, afin de réaliser un cordon de soudure,
le mouvement du profilé, à des intervalles pouvant être présélectionnés, étant freiné depuis une vitesse de production jusqu'à l'immobilisation du profilé, puis étant à nouveau accéléré à la vitesse de production,
et l'alimentation du profilé en énergie de soudage étant désactivée en dessous du seuil de vitesse de transport,
**caractérisé en ce que** l'emplacement du point de soudage est, à chaque immobilisation du profilé, déplacé à partir d'un point initial dans la direction de transport du profilé, le point de soudage étant, à la suite de la reprise du mouvement de transport et du dépassement du seuil de vitesse de transport, ramené à la position initiale à l'encontre de la direction de transport.

10. Procédé selon la revendication 9, **caractérisé en ce que** l'emplacement du point de soudage est, à chaque immobilisation du profilé, suffisamment déplacé dans la direction de transport pour que le point de soudage, à la suite de la reprise du mouvement de transport, lors du dépassement du seuil de vitesse de transport, continue le cordon de soudure interrompu par la désactivation de l'alimentation en énergie de soudage.

11. Procédé selon l'une des revendications 9 ou 10, **caractérisé en ce que** le mouvement de retour du point de soudage s'effectue pendant la reprise du mouvement de transport et est adapté à l'accélération du profilé de telle sorte que la vitesse relative du point de soudage et du profilé correspond approximativement à la vitesse de production.

12. Procédé selon l'une des revendications 9 à 11, **caractérisé en ce que** pour la soudure est utilisé un rayon laser.
